# FASCICULE DE BREVET EUROPEEN

(11) **EP 1 190 621 B1**
(45) Date de publication et mention de la délivrance du brevet: **08.12.2004**
(21) Numéro de dépôt: 01402404.6
(22) Date de dépôt: 19.09.2001
(51) Int. Cl.: A01J 25/16, B05B 7/14, B05B 15/04

(54) **Dispositif pour appliquer une substance pulvérulente sur des objets, notamment pour saler des fromages**
Vorrichtung zum Aufbringen einer pulverförmigen Substanz auf Objekten, insbesondere zum Salzen von Käse
Apparatus for applying a pulverulent substance on objects, in particular for salting cheese

(30) Priorité: 21.09.2000 FR 0012035
(43) Date de publication de la demande: 27.03.2002
(73) Titulaire: SOCIETE D'ETUDE, REALISATION ET VENTE A L'INDUSTRIE, SERVI S.A., 37130 Langeais (FR)
(72) Inventeur: Richard, Jean-Michel, 37190 Valleres (FR)
(74) Mandataire: Lemoine, Robert

(56) Documents cités:
- CH-A- 457 022
- FR-A- 2 258 131
- FR-A- 2 345 225
- FR-A- 2 350 146

## Description

La présente invention concerne un dispositif pour appliquer une substance pulvérulente sur l'une au moins des faces de plusieurs objets, notamment des produits alimentaires, comprenant des moyens d'entraînement pour déplacer les objets les uns à la suite des autres le long d'une trajectoire prédéterminée, et des moyens applicateurs situés au-dessous des moyens d'entraînement pour projeter la substance pulvérulente contre les objets.

De tels dispositifs sont décrits dans la demande de brevet français n° 2 345 225 et la demande de certificat d'addition n° 2 350 146

Les dispositifs présentés dans ces deux documents sont destinés à saler des fromages. Ils comprennent une série de buses équidistantes disposées transversalement à la trajectoire des fromages et servant à projeter contres ces derniers du sel mis sous la forme d'un lit fluidisé par de l'air chauffé à environ 35°C.

Ces buses projettent le sel sous forme de pinceaux plats formant des éventails se chevauchant partiellement afin que toute la surface externe des fromages soit salée.

La quantité de sel projetée est toutefois plus grande au niveau des parties des fromages qui correspondent aux chevauchements des pinceaux plats.

Le salage des fromages réalisé à l'aide des dispositifs connus n'est donc pas parfaitement uniforme, ce qui n'est pas satisfaisant pour les consommateurs.

La présente invention se propose plus particulièrement de remédier à cet inconvénient et, pour ce faire, elle a pour objet un dispositif permettant d'appliquer une substance pulvérulente sur l'une au moins des faces de plusieurs objets, ce dispositif ayant la structure indiquée au premier paragraphe ci-dessus et étant caractérisé en ce que les moyens applicateurs comprennent une trémie contenant la substance pulvérulente et comportant une sortie allongée s'étendant transversalement à la trajectoire des objets, un organe de distribution prévu au niveau de la sortie de la trémie pour en extraire la substance pulvérulente, une chambre verticale comportant une ouverture d'entrée longitudinale destinée à recevoir la substance extraite de la trémie et un orifice de sortie délimité par une fente longitudinale tournée vers le haut et située à un niveau supérieur à celui de l'ouverture d'entrée, cette fente s'étendant transversalement à la trajectoire des objets, un caisson relié à la chambre verticale par un passage longitudinal situé à un niveau inférieur à celui de l'ouverture d'entrée et ayant en coupe transversale la forme d'un venturi, et des moyens de soufflage pour envoyer de l'air sous pression dans le caisson et le transférer dans la chambre afin qu'il entraîne avec lui la substance pulvérulente hors de l'orifice de sortie et forme dans la direction longitudinale de celui-ci un rideau uniforme traversé par les objets.

Grâce à cet ensemble de dispositions, la substance pulvérulente peut maintenant être appliquée uniformément sur toute la surface extérieure des objets. En effet, comme la substance pulvérulente forme avec l'air sous pression un rideau uniforme le long de la fente longitudinale, sa concentration sur les objets est la même quel que soit l'endroit de sa projection sur ces derniers.

Selon un mode de réalisation particulier de l'invention, l'organe de distribution est un cylindre monté rotatif et pourvu de cannelures longitudinales.

On notera ici qu'il suffit de faire varier la vitesse de rotation du cylindre pour régler la quantité de sel projetée sur les objets.

De préférence, la sortie de la trémie est reliée à l'ouverture d'entrée de la chambre par un plan incliné s'étendant vers le bas en direction de cette dernière.

La substance pulvérulente sortant de la trémie peut ainsi être transférée uniformément dans la chambre, sur toute la longueur de l'ouverture d'entrée de celle-ci, uniquement sous l'effet de la gravité.

Afin d'éviter que la pression dans la chambre augmente au point de refouler la substance pulvérulente parvenant à l'ouverture d'entrée, il est souhaitable que la section en coupe transversale de l'orifice de sortie de la chambre soit supérieure ou égale à la somme des sections en coupe transversale de l'ouverture d'entrée de la chambre et du passage longitudinal prévu entre cette dernière et le caisson.

Avantageusement, le dispositif selon l'invention peut par ailleurs comprendre une paroi perméable à l'air située au-dessous des moyens d'entraînement des objets, dans le prolongement de l'entrée de la trémie, et sur laquelle est déposée une certaine quantité de substance pulvérulente, et une turbine destinée à souffler de l'air sous la paroi perméable afin de mettre la substance pulvérulente sous forme de lit fluidisé.

Ainsi, la substance pulvérulente est parfaitement sèche lorsqu'elle passe dans la trémie, ce qui garantit son application régulière et uniforme sur les objets.

La trémie demeure en outre constamment pleine, la substance en suspension dans le lit fluidisé pénétrant dans la trémie au fur et à mesure que la substance contenue dans celle-ci est évacuée par l'organe de distribution.

De préférence, la paroi perméable est traversée par la chambre tandis que la trémie est en aval de celle-ci on considérant le sens d'entraînement des objets.

On notera ici que la chambre n'empêche pas le passage de la substance pulvérulente. Comme celle-ci est sous la forme d'un lit fluidisé, elle se comporte comme un liquide et vient donc jusqu'à la trémie en passant au niveau des parties de la paroi perméable situées aux deux extrémités opposées longitudinalement de la chambre.

Le dispositif selon l'invention peut être utilisé pour appliquer une substance pulvérulente quelconque sur des objets divers, et notamment pour appliquer du sel sur des fromages en cours de production.

Un mode d'exécution de la présente invention sera décrit ci-après à titre d'exemple nullement limitatif en référence aux dessins annexés dans lesquels :

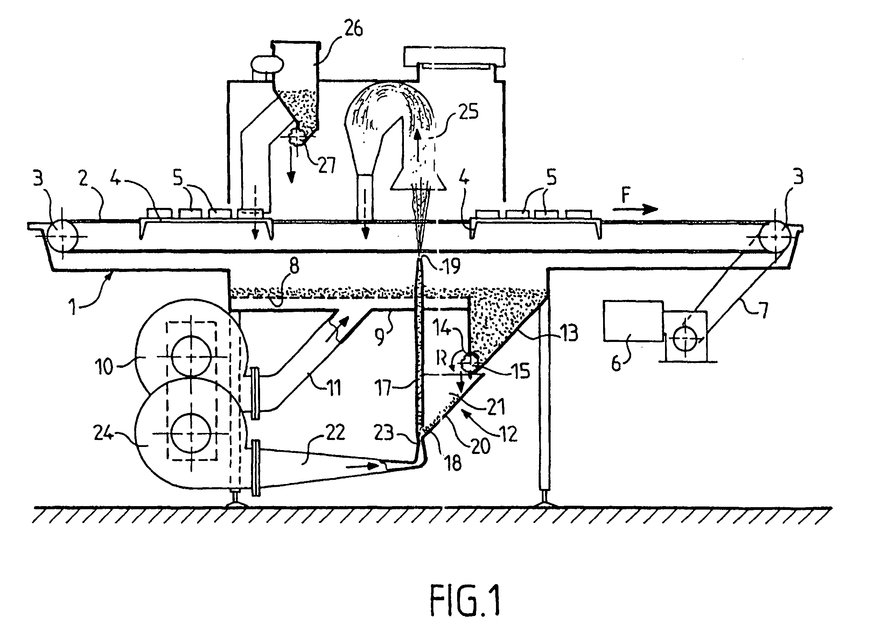

- la figure 1 est une vue de côté schématique d'un dispositif conforme à l'invention destiné à saler des fromages en cours de fabrication ;
- la figure 2 est une vue en perspective schématique des moyens prévus dans le dispositif visible sur la figure 1 pour appliquer le sel sur les fromages ; et
- la figure 3 est une vue en coupe schématique et à échelle agrandie de la partie inférieure de la trémie contenant le sel.

Le dispositif représenté sur les dessins a été conçu pour appliquer du sel fin sur des fromages en cours de fabrication. Il va de soi cependant qu'il pourrait être utilisé pour appliquer d'autres substances pulvérulentes sur d'autres produits, alimentaires ou non.

Le dispositif représenté comprend un châssis 1 sur lequel sont prévues des bandes transporteuses 2 passant sur des poulies 3 et supportant des claies 4 pourvues d'un fond ajouré sur lequel reposent les fromages à saler 5.

Le brin supérieur des bandes transporteuses 2 est déplaçable dans le sens de la flèche F sous la commande d'un ensemble moto-réducteur 6 relié à l'une des poulies 3 par l'intermédiaire d'une courroie de transmission 7.

Le dispositif destiné à appliquer le sel comprend également une paroi 8 perméable à l'air, située sous le brin inférieur des bandes transporteuses 2 et constituant la face supérieure d'un caisson 9 relié à une turbine 10 par l'intermédiaire d'un conduit 11.

La paroi 8 supporte du sel fin pouvant être mis sous forme de lit fluidisé par l'air sous pression fourni par la turbine 10.

On notera ici que la paroi 8 est constituée par une plaque horizontale pourvue de perforations suffisamment fines pour ne pas laisser passer les grains de sel à travers elle, et s'étend parallèlement aux brins supérieur et inférieur des bandes 2.

Le dispositif représenté comprend en outre des moyens 12 pour appliquer du sel fin sur la face inférieure des fromages 5.

Les moyens applicateurs 12 comprennent tout d'abord une trémie 13 comportant une sortie allongée 14 s'étendant perpendiculairement à la trajectoire des fromages.

La trémie 13 contient du sel fin et est pourvue à sa sortie d'un organe de distribution 15 destiné à extraire le sel sous la forme d'un rideau ayant une épaisseur constante le long de la sortie 14.

Dans le mode de réalisation représenté, l'organe de distribution 15 est constitué par un cylindre pourvu de cannelures longitudinales 16 et destiné à être entraîné en rotation dans le sens de la flèche R par des organes moteurs conventionnels non représentés.

Ces organes moteurs sont avantageusement pourvus de moyens permettant de régler la vitesse de rotation du cylindre 15 et donc la quantité de sel évacué de la trémie 13.

Les moyens applicateurs 12 comprennent également une chambre verticale 17 comportant une ouverture d'entrée longitudinale 18 destinée à recevoir le sel en provenance de la trémie 13, et un orifice de sortie 19 tourné vers le haut, cet orifice étant situé entre la plaque 8 et le brin supérieur des bandes transporteuses 2 et s'étendant perpendiculairement à la trajectoire des fromages.

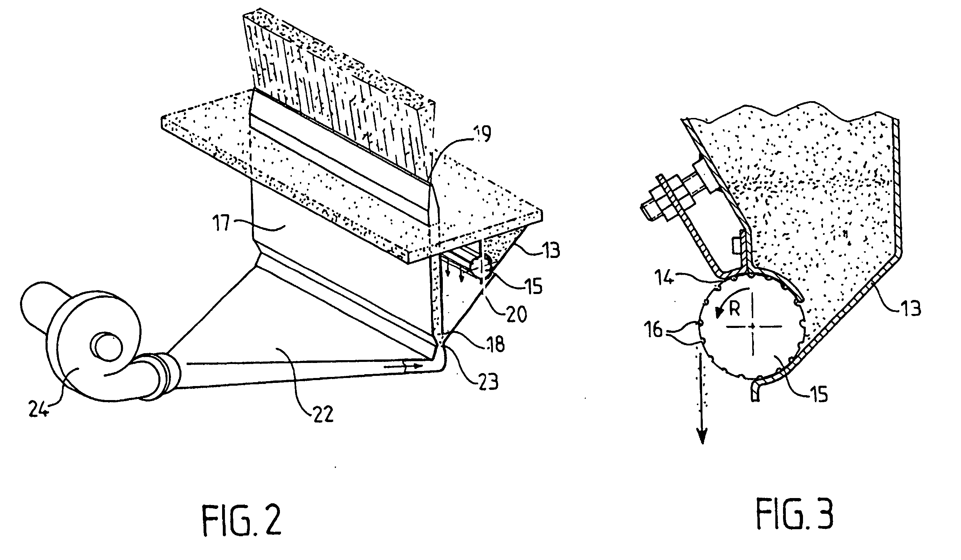

Comme le montre plus clairement la figure 2, la sortie de la trémie 13 est reliée à l'ouverture d'entrée 18 de la chambre 17 par un plan incliné 20 s'étendant vers le bas en direction de cette dernière, ce plan incliné constituant le fond d'une goulotte de transfert 21.

Ainsi, le sel extrait de la trémie peut pénétrer directement dans la chambre 17 par simple gravité.

Les moyens applicateurs 12 comprennent par ailleurs un caisson 22 relié à la chambre 17 par un passage longitudinal 23 situé à un niveau inférieur à celui de l'ouverture d'entrée 18 et ayant en coupe transversale la forme d'un venturi.

Des moyens de soufflage classiques 24, par exemple un ventilateur ou une turbine, sont prévus pour envoyer de l'air sous pression dans le caisson 22 afin que cet air se dirige dans la chambre 17 et entraîne le sel avec lui depuis l'ouverture d'entrée 18 jusqu'à l'orifice de sortie 19.

A sa sortie de la chambre, l'air chargé en sel forme, sur toute la longueur de l'orifice 19, un rideau uniforme atteignant les fromages entraînés dans le sens de la flèche F et assurant un salage régulier de la face inférieure de ces derniers.

On notera ici que la section en coupe transversale de l'orifice de sortie 19 est supérieure ou égale à la somme des sections en coupe transversale de l'ouverture d'entrée 18 et du passage longitudinal 23.

Cette disposition est en effet nécessaire pour éviter que le sel soit refoulé par l'ouverture d'entrée 18.

En revenant à la figure 2, on remarquera que la chambre 17 traverse la paroi perméable 8 et que la trémie 13 est située en aval de celle-ci en considérant le sens d'entraînement des fromages.

Lorsque le sel situé sur la plaque 8 est sous la forme d'un lit fluidisé, il peut aisément contourner la chambre 17 pour parvenir dans la trémie et maintenir cette dernière constamment pleine.

Le dispositif destiné à saler les fromages qui vient d'être décrit comprend par ailleurs une hotte 25 située au-dessus de la trajectoire des fromages, à l'aplomb de l'orifice de sortie 19 de la chambre 17, et destinée à récupérer le sel qui n'a pas été appliqué contre la face inférieure des fromages en vue de le ramener sur la plaque perforée 8.

Il comprend également une trémie 26 similaire à la trémie 13 et renfermant du sel destiné à être appliqué sur la face supérieure des fromages.

Comme la trémie 13, la trémie 26 est pourvue à sa sortie d'un cylindre cannelé 27 monté rotatif de manière à pouvoir tourner sous la commande d'organes moteurs conventionnels non représentés pourvus de moyens prévus pour régler la vitesse de rotation du cylindre 27 et donc la quantité de sel déversé sur les fromages.

Il ressort de la description ci-dessus que le dispositif conforme à l'invention permet non seulement d'appliquer une quantité de sel régulière et uniformément répartie sur des fromages, mais encore de régler facilement cette quantité de sel par un réglage approprié de la vitesse de rotation du cylindre 15 de la trémie 13 et du cylindre 27 de la trémie 26.

On notera enfin que le dispositif selon l'invention, s'il a été conçu pour saler des fromages, pourrait être utilisé pour d'autres usages sans que l'on sorte pour autant du cadre de la présente invention. Il pourrait en effet être utilisé dans d'autres domaines de l'industrie alimentaire, par exemple en charcuterie, pâtisserie et salaison, pour appliquer sur les produits concernés des substances pulvérulentes telles que du sel, du sucre, de l'ail, etc...

Il pourrait même être utilisé dans des domaines sans rapport avec l'industrie alimentaire dès lors qu'il existe un besoin d'appliquer un produit pulvérulent sur un objet.

## Revendications

1. Dispositif pour appliquer une substance pulvérulente sur l'une au moins des faces de plusieurs objets (5), notamment des produits alimentaires, comprenant des moyens d'entraînement (2) pour déplacer les objets les uns à la suite des autres le long d'une trajectoire prédéterminée, et des moyens applicateurs (12) situés au-dessous des moyens d'entraînement pour projeter la substance pulvérulente contre les objets, **caractérisé en ce que** les moyens applicateurs (12) comprennent une trémie (13) contenant la substance pulvérulente et comportant une sortie allongée (14) s'étendant transversalement à la trajectoire des objets, un organe de distribution (15) prévu au niveau de la sortie de la trémie pour en extraire la substance pulvérulente, une chambre verticale (17) comportant une ouverture d'entrée longitudinale (18) destinée à recevoir la substance extraite de la trémie (13) et un orifice de sortie (19) délimité par une fente longitudinale tournée vers le haut et située à un niveau supérieur à celui de l'ouverture d'entrée (18), cette fente s'étendant transversalement à la trajectoire des objets, un caisson (22) relié à la chambre verticale (17) par un passage longitudinal (23) situé à un niveau inférieur à celui de l'ouverture d'entrée (18) et ayant en coupe transversale la forme d'un venturi, et des moyens de soufflage (24) pour envoyer de l'air sous pression dans le caisson (22) et le transférer dans la chambre (17) afin qu'il entraîne avec lui la substance pulvérulente hors de l'orifice de sortie (19) et forme dans la direction longitudinale de celui-ci un rideau uniforme traversé par les objets (5).

2. Dispositif selon la revendication 1, **caractérisé en ce que** l'organe de distribution (15) est un cylindre monté rotatif et pourvu de cannelures longitudinales (16).

3. Dispositif selon la revendication 1 ou 2, **caractérisé en ce que** la sortie (14) de la trémie (13) est reliée à l'ouverture d'entrée (18) de la chambre (17) par un plan incliné (20) s'étendant vers le bas en direction de cette dernière.

4. Dispositif selon l'une quelconque des revendications 1 à 3, **caractérisé en ce que** la section en coupe transversale de l'orifice de sortie (19) de la chambre (17) est supérieure ou égale à la somme des sections en coupe transversale de l'ouverture d'entrée (18) de la chambre (17) et du passage longitudinal (23) prévu entre cette dernière et le caisson (22).

5. Dispositif selon l'une quelconque des revendications précédentes, **caractérisé en ce qu'**il comprend une paroi perméable à l'air (8) située au-dessous des moyens d'entraînement (2) des objets (5), dans le prolongement de l'entrée de la trémie (13), et sur laquelle est déposée une certaine quantité de substance pulvérulente, et une turbine (10) destinée à souffler de l'air sous la paroi perméable (8) afin de mettre la substance pulvérulente sous forme de lit fluidisé.

6. Dispositif selon la revendication 5, **caractérisé en ce que** la paroi perméable (8) est traversée par la chambre (17) tandis que la trémie (13) est en aval de celle-ci en considérant le sens d'entraînement des objets (5).

7. Utilisation du dispositif selon l'une quelconque des revendications précédentes pour appliquer du sel sur des fromages en cours de fabrication.

## Claims

1. An apparatus for applying a powdery substance onto at least one face of a plurality of articles (5), in particular food products, comprising driving means (2) for moving the articles in succession along a predetermined path, and application means (12) located below the driving means for projecting the powdery substance onto the articles, **characterized in that** the application means (12) comprises a hopper (13) containing the powdery substance and having an elongated outlet (14), which extends transversely to the path of the articles, a distributor (15) provided at the outlet of the hopper for extracting the powdery substance, a vertical chamber (17) with a longitudinal inlet opening (18) for receiving the substance extracted from the hopper (13) and with an outlet orifice (19) delimited by a longitudinal slot turned upwards and located at a higher level than the inlet opening (18), said slot extending transversely to the path of the articles, a box (22) connected to the vertical chamber (17) through a longitudinal passage (23) located at a lower level than the inlet opening (18) and being venturi-shaped in cross section, and blowing means (24) for blowing pressurized air into box (22) and transferring said air to chamber (17) so that it drives the powdery substance with it out of the outlet orifice (19) and forms in the longitudinal direction thereof a uniform curtain through which the articles (5) travel.

2. The apparatus according to claim 1, **characterized in that** the distributor (15) is a cylinder, which is rotatably mounted and provided with longitudinal grooves (16).

3. The apparatus according to claim 1 or 2, **characterized in that** the outlet (14) of the hopper (13) is connected to the inlet opening (18) of chamber (17) by an inclined plane (20), which extends downwardly towards the latter.

4. The apparatus according to any of claims 1 to 3, **characterized in that** the area in cross section of the outlet orifice (19) of chamber (17) is larger than or equal to the sum of the areas in cross section of the inlet opening (18) of chamber (17) and of the longitudinal passage (23) provided between the latter and the box (22).

5. The apparatus according to any of the preceding claims, **characterized in that** it comprises a wall (8) permeable to air which is located below the driving means (2) of the articles (5), in continuation of the hopper (13) inlet, and on which a certain amount of powdery substance is deposited, and a turbine (10) for blowing air under the permeable wall (8) in order to form the powdery substance into a fluidized bed.

6. The apparatus according to claim 5, **characterized in that** the permeable wall (8) is traversed by the chamber (17), and the hopper (13) is downstream thereof, when considering the driving direction of the articles (5).

7. Use of the apparatus according to any of the preceding claims for applying salt onto cheeses during production.

## Patentansprüche

1. Vorrichtung zum Aufbringen einer pulverförmigen Substanz auf mindestens einer der Flächen von mehreren Objekten (5), insbesondere von Lebensmittelprodukten, welche Antriebsmittel (2) zum Verschieben der Objekte nach einander in Folge entlang einer vorgegebenen Bahn aufweist, sowie Auftragmittel (12), die sich unter den Antriebsmitteln befinden, um die pulverförmige Substanz gegen die Objekte zu sprühen, **dadurch gekennzeichnet, dass** die Auftragmittel (12) einen Aufgabetrichter (13) aufweisen, welcher die pulverförmige Substanz enthält und ein lang gestrecktes Austragsteil (14) umfasst, welches s ich q uer z ur B ahn d er O bjekte e rstreckt, sowie ein in Höhe des Austragsteils des Aufgabetrichters vorgesehenes Abgabeelement (15), welches die pulverförmige Substanz daraus entnimmt, sowie eine vertikale Kammer (17), die eine in Längsrichtung verlaufende Einlassöffnung (18), die zur Aufnahme der aus dem Aufgabetrichter (13) entnommenen Substanz bestimmt ist, und eine Auslassöffnung (19) besitzt, welche von einem nach oben weisenden, in Längsrichtung verlaufenden Schlitz begrenzt wird, der höher liegt als die Einlassöffnung (18), wobei sich dieser Schlitz quer zur Bahn der Objekte erstreckt, und ferner einen Kastenbehälter (22), der mit der vertikalen Kammer (17) über einen in Längsrichtung verlaufenden Kanal (23) verbunden ist, der niedriger liegt als die Einlassöffnung (18) und einen Querschnitt in Form eines Venturi-Rohres besitzt, und schließlich Gebläseeinrichtungen (24), um Druckluft in den Kastenbehälter (22) einzublasen und die Druckluft in die Kammer (17) einzutragen, damit diese die pulverförmige Substanz aus der Auslassöffnung mit sich führt und in Längsrichtung derselben einen gleichmäßigen Vorhang bildet, durch den sich die Objekte (5) hindurch bewegen.

2. Vorrichtung nach Anspruch 1, **dadurch gekennzeichnet, dass** das Abgabeelement (15) ein drehbar angebrachter Zylinder ist und in Längsrichtung verlaufende Auskehlungen (16) aufweist.

3. Vorrichtung nach Anspruch 1 oder 2, **dadurch gekennzeichnet, dass** das Austragteil (14) des Aufgabetrichters (13) mit der Einlassöffnung (18) der Kammer (17) mittels einer schrägen Ebene (20) verbunden ist, welche sich in Richtung der letzteren nach unten erstreckt.

4. Vorrichtung nach einem der Ansprüche 1 bis 3, **dadurch gekennzeichnet, dass** der Querschnitt der Auslassöffnung (19) der Kammer (17) größer als die Summe aus den Querschnitten der Einlassöffnung (18) und des sich in Längsrichtung erstreckenden Kanals (23), der zwischen der Kammer und dem Kastenbehälter (22) vorgesehen ist, oder gleich der Summe ist.

5. Vorrichtung nach einem der vorhergehenden Ansprüche, **dadurch gekennzeichnet, dass** sie eine luftdurchlässige Wandung (8) aufweist, die sich unter den Antriebsmitteln (2) der Objekte in der Verlängerung des Einlaufs in den Aufgabetrichter (13) befindet, und auf welcher eine bestimmte Menge der pulverförmigen Substanz aufgetragen wird, sowie eine Turbine (10), die dazu bestimmt ist, Luft unter die durchlässige Wandung (8) einzublasen, um die pulverförmige Substanz in die Form einer Wirbelschicht zu bringen.

6. Vorrichtung nach Anspruch 5, **dadurch gekennzeichnet, dass** sich durch die durchlässige Wandung (8) die Kammer (17) erstreckt, wohingegen sich der Aufgabetrichter (13) auf der Abströmseite derselben befindet, wenn man die Antriebsrichtung der Objekte (5) berücksichtigt.

7. Verwendung der Vorrichtung nach einem der vorhergehenden Ansprüche zum Aufbringen von Salz auf Käse während dessen Herstellung.
